# EUROPEAN PATENT APPLICATION

(11) **EP 4 644 035 A1**
(43) Date of publication of application: **05.11.2025**
(21) Application number: 24905128.5
(22) Date of filing: 19.08.2024
(51) Int. Cl.: B23K 37/00

(54) **BATTERY CASE-COVER WELDING SYSTEM AND SPOT INSPECTION METHOD THEREFOR**

(30) Priority: 21.02.2024 CN 202410192200
(71) Applicant: Contemporary Amperex Technology Co., Limited, Jiaocheng District Ningde Fujian 352100 (CN)
(72) Inventor: HAN, Donglu, Ningde, Fujian 352100 (CN); ZHENG, Nishan, Ningde, Fujian 352100 (CN); QIN, Bo, Ningde, Fujian 352100 (CN); MENG, Pengfei, Ningde, Fujian 352100 (CN)
(74) Representative: Gong, Jinping
(86) International application number: PCT/CN2024/113143
(87) International publication number: WO 2025/175718

(57) **Abstract**

The present application provides a battery housing cover welding system and a point check method for same. The system includes a calibration block including a battery profiling body which includes: a top surface, a first side surface joined to the top surface through a first edge, a second side surface joined to the top surface through a second edge, a third side surface joined to the top surface through a third edge, and a fourth side surface joined to the top surface through a fourth edge; a first surface feature, a second surface feature, a third surface feature, and a fourth surface feature that are disposed near the first edge, the second edge, the third edge, and the fourth edge, respectively, and all located on the top surface; and a first side surface feature, a second side surface feature, a third side surface feature, and a fourth side surface feature that are disposed near the first edge, the second edge, the third edge, and the fourth edge, respectively, and located on the first side surface, the second side surface, the third side surface, and the fourth side surface, respectively. The technical solution of embodiments of the present application may enable the determining of whether the battery housing cover welding system has a fault.

## Description

### CROSS REFERENCE

The present application makes reference to Chinese Patent Application No. 202410192200.5 filed on February 21, 2024 and entitled "BATTERY HOUSING COVER WELDING SYSTEM AND POINT CHECK METHOD FOR SAME", which is incorporated herein by reference in its entirety.

### TECHNICAL FIELD

The present application relates to the field of check technologies, and in particular, to a battery housing cover welding system and a point check method for a battery housing cover welding system.

### BACKGROUND

In the industry, a battery housing cover welding system is a critical part, which is used to make the quality and performance of a produced battery satisfy the standards to ensure the safety, reliability, and performance of the entire manufactured product.

Determining whether the battery housing cover welding system operates normally is a key link for ensuring stable and reliable operation of the battery housing cover welding system. By checking the battery housing cover welding system, some potential faults can be prevented, and a problem can be found and solved timely when it occurs. Only when the battery housing cover welding system operates normally, can the accuracy of measurement data collected by the battery housing cover welding system be ensured for subsequent quality analysis and improvement. By checking the battery housing cover welding system, problems that may result in defects or defective products can be detected and corrected, e.g., a damaged light source, a contaminated lens, a loose cable connection, etc., all of which may affect the normal operation of the system. Recording related data and a check result during checking of the battery housing cover welding system facilitates the establishment of history record and traceability of system maintenance, which is critical to quality management, troubleshooting, and improvement processes, and can provide valuable information and grounds.

How to enable stable and reliable operation of the battery housing cover welding system to effect benefits is an urgent technical problem to be solved in the art.

### SUMMARY

The present application aims to solve at least one of the technical problems described in the Background. In view of this, an objective of the present application is to provide a battery housing cover welding system and a point check method for a battery housing cover welding system, so as to enable stable and reliable operation of the battery housing cover welding system.

According to a first aspect, an embodiment of the present application provides a battery housing cover welding system, including: a calibration block including a battery profiling body which includes: a top surface, a first side surface joined to the top surface through a first edge, a second side surface joined to the top surface through a second edge, a third side surface joined to the top surface through a third edge, and a fourth side surface joined to the top surface through a fourth edge; a first surface feature, a second surface feature, a third surface feature, and a fourth surface feature that are disposed near the first edge, the second edge, the third edge, and the fourth edge, respectively, and all located on the top surface; and a first side surface feature, a second side surface feature, a third side surface feature, and a fourth side surface feature that are disposed near the first edge, the second edge, the third edge, and the fourth edge, respectively, and located on the first side surface, the second side surface, the third side surface, and the fourth side surface, respectively; an image acquisition assembly including a first camera, a second camera, a third camera, and a fourth camera, where the first camera is located diagonally above the first edge and used to acquire check images of the first surface feature and the first side surface feature, the second camera is located diagonally above the second edge and used to acquire check images of the second surface feature and the second side surface feature, the third camera is located diagonally above the third edge and used to acquire check images of the third surface feature and the third side surface feature, and the fourth camera is located diagonally above the fourth edge and used to acquire check images of the fourth surface feature and the fourth side surface feature; and a host computer configured to determine a hardware point check result of the image acquisition assembly based on the check images acquired by the image acquisition assembly.

In the technical solution of the embodiment of the present application, the top surface and the four side surfaces of the battery profiling body of the calibration block are each provided with corresponding surface features and side surface features, to facilitate a point check of the four cameras at specific positions of the image acquisition assembly, making it possible to determine whether the image acquisition assembly of the battery housing cover welding system has a fault. Accordingly, a problem may be found and solved timely, to ensure normal operation of the battery housing cover welding system, improving the measurement accuracy and reliability, and thereby ensuring the accuracy of a hardware point check result. Compared with a conventional manual measurement method, the embodiment described above reduces manual intervention, not only improving a check speed and thereby improving production efficiency, but also reducing the possibility of an artificial error.

In some embodiments, each of the first surface feature, the second surface feature, the third surface feature, and the fourth surface feature includes a plurality of surface feature portions spaced apart in an extension direction of a corresponding near edge among the first edge, the second edge, the third edge, and the fourth edge; and each of the first side surface feature, the second side surface feature, the third side surface feature, and the fourth side surface feature includes a plurality of side surface feature portions spaced apart in an extension direction of a corresponding near edge among the first edge, the second edge, the third edge, and the fourth edge. As described above, by providing a plurality of surface feature portions and a plurality of side surface feature portions on each of the top surface and the four side surfaces of the battery profiling body, an image acquisition unit is enabled to obtain a plurality of feature portions at one time, thereby effectively improving the point check efficiency and the accuracy of subsequently determining whether the battery housing cover welding system has a fault. Further, the plurality of feature portions are each spaced apart along the corresponding near edges, making it possible to reduce mutual interference in determining the feature portions based on the check images thereof, so that images of the plurality of feature portions can be obtained more accurately.

In some embodiments, the plurality of surface feature portions each include first dimensions parallel to the corresponding near edge and the top surface and second dimensions perpendicular to the corresponding near edge and parallel to the top surface, where either the first dimensions or the second dimensions of the plurality of surface feature portions vary along an extension direction of the corresponding near edge according to a first preset variation rule; and the plurality of side surface feature portions each include fourth dimensions perpendicular to a corresponding side surface where the side surface feature portions are located among the first side surface, the second side surface, the third side surface, and the fourth side surface, where the fourth dimensions of the plurality of side surface features vary along an extension direction of the corresponding near edge according to a second preset variation rule. The specific dimensions of the surface features and the side surface features on the battery profiling body provided in this embodiment are subjected to preset variation rules. As such, the check no longer depends on comparison with a single measurement value, making the check more robust, and an operating state of the battery housing cover welding system may be determined more accurately, thereby improving the precision and reliability of fault diagnosis.

In some embodiments, the plurality of surface feature portions each further include third dimensions perpendicular to the top surface, where the others of the first dimensions and the second dimensions of the plurality of surface feature portions are equal to each other, and the third dimensions of the plurality of surface feature portions are equal to each other; and the plurality of side surface feature portions each further include fifth dimensions parallel to the corresponding side surface where the side surface feature portions are located and the corresponding near edge and sixth dimensions parallel to the corresponding side surface where the side surface feature portions are located and perpendicular to the corresponding near edge, where the fifth dimensions of the plurality of side surface feature portions are equal to each other, and the sixth dimensions of the plurality of side surface feature portions are equal to each other. The implementation described above, by setting the other dimensions of the plurality of surface feature portions/side surface feature portions to be equal to each other, enables the host computer to determine the hardware point check result without considering these dimensions kept to be equal, thereby improving the point check efficiency.

In some embodiments, the host computer is configured to: determine a point check determination parameter based on check images acquired by the first camera, the second camera, the third camera, and the fourth camera, and determine the hardware point check result based on the point check determination parameter, where the point check determination parameter includes check values of either the first dimensions or the second dimensions of the plurality of surface feature portions of each surface feature and check values of the fourth dimensions of the plurality of side surface feature portions of each side surface feature. The implementation described above enables the host computer to obtain, based on the check images acquired by the image acquisition unit when determining the hardware point check result, only the dimensions of the plurality of surface feature portions/side surface feature portions that vary according to the preset variation rule, thereby improving the point check efficiency.

In some embodiments, determining the hardware point check result based on the point check determination parameter includes: for each surface feature, determining a first check variation rule of the plurality of surface feature portions of the surface feature based on the check values of either the first dimensions or the second dimensions of the plurality of surface feature portions of the surface feature; for each side surface feature, determining a second check variation rule of the plurality of side surface feature portions of the side surface feature based on check values of the fourth dimensions of the plurality of side surface feature portions of the side surface feature; comparing the first check variation rule of each surface feature and the second check variation rule of each side surface feature with the first preset variation rule of the surface feature and the second preset variation rule of the side surface feature, respectively; and determining whether the hardware point check result is passed based on a result of the comparison. The specific dimensions of the surface features and the side surface features on the battery profiling body provided in this embodiment are subjected to preset variation rules. As such, the check no longer depends on comparison with a single measurement value, making the check more robust, and an operating state of the battery housing cover welding system may be determined more accurately, thereby improving the precision and reliability of fault diagnosis.

In some embodiments, the host computer is further configured to determine a software point check result of visual check software in the host computer, including: obtaining at least one defect image of a battery housing cover that includes at least one welding defect; determining a defect check result of the at least one defect image through the visual check software; and determining the software point check result of the battery housing cover welding system based on the defect check result. The implementation described above obtains the defect check result of the preset defect image using the visual check software of the host computer, and may determine the software point check result of the visual check software of the battery housing cover welding system based on the defect check result. Accordingly, a problem may be found and solved timely, to ensure normal operation of the battery housing cover welding system, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

In some embodiments, the defect check result of the at least one defect image includes check defect data of the welding defect included in the at least one defect image, and determining the software point check result of the battery housing cover welding system based on the defect check result includes: obtaining actual defect data of the welding defect included in the at least one defect image; and determining whether the software point check result is passed based on the check defect data and the actual defect data. The implementation described above obtains the defect check result of the preset defect image using the visual check software of the host computer, and may determine the software point check result of the visual check software of the battery housing cover welding system based on the defect check result. Accordingly, a problem may be found and solved timely, to ensure normal operation of the battery housing cover welding system, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

In some embodiments, the actual defect data includes an actual defect type of the welding defect included in the at least one defect image, the check defect data includes a check defect type of the welding defect included in the at least one defect image, and determining whether the software point check result is passed based on the check defect data and the actual defect data includes: comparing the actual defect type of the welding defect included in the at least one defect image with the check defect type; and in response to an actual defect type of a first welding defect included in a first defect image of the at least one defect image being different from the check defect type, determining that the software point check result is not passed. The implementation described above enables convenient and efficient check of a software parameter of the battery housing cover welding system by specifically comparing the actual defect type of the sample image with a check defect type.

In some embodiments, an indicator is also provided on the top surface to indicate a placement direction of the calibration block relative to the image acquisition assembly. The implementation described above may facilitate the determining of a feeding direction of the calibration block, thus ensuring that the image acquisition assembly sequentially acquires the check images of the surface feature portions and the side surface feature portions at specific positions for comparison with theoretical dimensions of the surface feature portions and the side surface feature portions at the corresponding positions that are pre-stored in the system. As such, the accuracy of the point check result may be ensured.

In some embodiments, the image acquisition assembly further includes a mounting bracket, and the first camera, the second camera, the third camera and the fourth camera are connected to the mounting bracket and movable relative to the mounting bracket. The implementation described above enables the adjusting of positions of the cameras, so as to improve the effectiveness of the acquired check images.

In some embodiments, the mounting bracket includes a first vertical support portion, a second vertical support portion, a first horizontal support portion, a second horizontal support portion, and a bottom plate, where the first vertical support portion and the second vertical support portion are spaced apart by a distance and fixed on the bottom plate, the first horizontal support portion and the second horizontal support portion are spaced apart by a distance and connected between the first vertical support portion and the second vertical support portion, and the first camera, the second camera, the third camera, and the fourth camera are movably connected to the bottom plate. The implementation described above may improve the stability of the mounting bracket, thereby improving the effectiveness of the check images acquired by the cameras mounted on the mounting bracket.

In some embodiments, the first vertical support portion and the second vertical support portion are disposed in parallel and perpendicular to the bottom plate, and the first horizontal support portion and the second horizontal support portion are disposed in parallel and parallel to the bottom plate. The implementation described above may improve the stability of the mounting bracket, thereby improving the effectiveness of the check images acquired by the cameras mounted on the mounting bracket.

In some embodiments, at least one of the first vertical support portion, the second vertical support portion, the first horizontal support portion, and the second horizontal support portion is provided with a hollow portion. The implementation described above may reduce the weight of the mounting bracket, thereby saving costs.

In some embodiments, a spacing by which the plurality of surface feature portions of each surface feature are spaced apart and a spacing by which the plurality of side surface feature portions of each side surface feature are spaced apart are determined based on check precisions of the first camera, the second camera, the third camera, and the fourth camera. The implementation described above may improve the effectiveness of the surface features and the side surface features in the acquired check images.

According to a second aspect, an embodiment of the present application provides a point check method for a battery housing cover welding system, where the point check method is performed in the battery housing cover welding system according to the present disclosure, and the point check method includes: obtaining check images of a first surface feature, a second surface feature, a third surface feature, a fourth surface feature, a first side surface feature, a second side surface feature, a third side surface feature, and a fourth side surface feature; determining a point check determination parameter based on the check images; determining hardware point check results of a first camera, a second camera, a third camera, and a fourth camera based on the point check determination parameter; obtaining at least one defect image of a battery housing cover that includes at least one welding defect; determining a defect check result of the at least one defect image through visual check software of the system; and determining a software point check result of the visual check software based on the defect check result.

The system in the implementation described above determines the hardware point check result of the system by obtaining the check images of the surface feature portions and the side surface feature portions on the calibration block and obtaining the point check determination parameter based on the check images, obtains the defect check result of the preset defect image using the visual check software of the host computer, and determines the software point check result of the visual check software of the battery housing cover welding system based on the defect check result. In this way, a problem may be found and solved timely, to ensure normal operation of the battery housing cover welding system, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

In some embodiments, the first camera and the third camera are disposed oppositely, the second camera and the fourth camera are disposed oppositely, and obtaining the check images of the first surface feature, the second surface feature, the third surface feature, the fourth surface feature, the first side surface feature, the second side surface feature, the third side surface feature, and the fourth side surface feature includes: causing the first camera and the third camera to be moved relative to an extension direction of the first edge and an extension direction of the third edge, respectively, to acquire check images of the first surface feature, the first side surface feature, the third surface feature, and the third side surface feature; and causing the second camera and the fourth camera to be moved relative to an extension direction of the second edge and an extension direction of the fourth edge, respectively, to acquire check images of the second surface feature, the second side surface feature, the fourth surface feature, and the fourth side surface feature. The implementation described above enables two of the cameras disposed oppositely to be moved relative to the corresponding edges to acquire the check images, and then enables the other two cameras disposed oppositely to be moved relative to the corresponding edges to acquire the check images, thereby improving the efficiency of acquiring the check images while preventing the cameras from interfering with each other during the movement.

In some embodiments, each of the first surface feature, the second surface feature, the third surface feature, and the fourth surface feature includes a plurality of surface feature portions, and the plurality of surface feature portions each include first dimensions parallel to a corresponding near edge among the first edge, the second edge, the third edge, and the fourth edge and the top surface and second dimensions perpendicular to the corresponding near edge and parallel to the top surface, where either the first dimensions or the second dimensions of the plurality of surface feature portions vary according to a first preset variation rule; each of the first side surface feature, the second side surface feature, the third side surface feature, and the fourth side surface feature includes a plurality of side surface feature portions, and the plurality of side surface feature portions each include fourth dimensions perpendicular to a corresponding side surface where the side surface feature portions are located among the first side surface, the second side surface, the third side surface, and the fourth side surface, where the fourth dimensions of the plurality of side surface features vary according to a second preset variation rule; and where the point check determination parameter includes check values of either the first dimensions or the second dimensions of the plurality of surface feature portions of each surface feature and check values of the fourth dimensions of the plurality of side surface feature portions of each side surface feature. The implementation described above enables the obtaining, based on the check images acquired by the image acquisition unit in determining the hardware point check result, of only the dimensions of the plurality of surface feature portions/side surface feature portions that vary according to the preset variation rule, thereby improving the point check efficiency.

In some embodiments, determining the hardware point check results of the first camera, the second camera, the third camera, and the fourth camera based on the point check determination parameter includes: for each surface feature, determining a first check variation rule of the plurality of surface feature portions of the surface feature based on the check values of either the first dimensions or the second dimensions of the plurality of surface feature portions of the surface feature; for each side surface feature, determining a second check variation rule of the plurality of side surface feature portions of the side surface feature based on check values of the fourth dimensions of the plurality of side surface feature portions of the side surface feature; comparing the first check variation rule of each surface feature and the second check variation rule of each side surface feature with the first preset variation rule of the surface feature and the second preset variation rule of the side surface feature, respectively; and determining whether the hardware point check result is passed based on a result of the comparison. The specific dimensions of the surface features and the side surface features on the battery profiling body provided in this embodiment are subjected to preset variation rules. As such, the check no longer depends on comparison with a single measurement value, making the check more robust, and an operating state of the battery housing cover welding system may be determined more accurately, thereby improving the precision and reliability of fault diagnosis.

In some embodiments, the defect check result of the at least one defect image includes check defect data of the welding defect included in the at least one defect image, and determining the software point check result of the visual check software based on the defect check result includes: obtaining actual defect data of the welding defect included in the at least one defect image; and determining whether the software point check result is passed based on the check defect data and the actual defect data. The implementation described above obtains the defect check result of the preset defect image using the visual check software of the host computer, and may determine the software point check result of the visual check software of the battery housing cover welding system based on the defect check result. Accordingly, a problem may be found and solved timely, to ensure normal operation of the battery housing cover welding system, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

In some embodiments, the actual defect data includes an actual defect type of the welding defect included in the at least one defect image, the check defect data includes a check defect type of the welding defect included in the at least one defect image, and determining whether the software point check result is passed based on the check defect data and the actual defect data includes: comparing the actual defect type of the welding defect included in the at least one defect image with the check defect type; and in response to an actual defect type of a first welding defect included in a first defect image of the at least one defect image being different from the check defect type, determining that the software point check result is not passed. The implementation described above enables convenient and efficient check of a software parameter of the battery housing cover welding system by specifically comparing the actual defect type of the sample image with a check defect type.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application. In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic diagram of a battery housing cover welding system according to some embodiments of the present application;
FIG. 2 is a schematic front view of a relative position of a camera and a calibration block according to some embodiments of the present application;
FIG. 3 is a three-dimensional view of th calibration block according to some embodiments of the present application;
FIG. 4 is a front view of a top surface of the calibration block according to some embodiments of the present application;
FIG. 5 is an enlarged view of a portion of the top surface of the calibration block in FIG. 4;
FIG. 6 is a front view of a second side surface of the calibration block according to some embodiments of this application;
FIG. 7 is a front view of a first side surface of the calibration block according to some embodiments of the present application;
FIG. 8 is a schematic flowchart of a point check method for a battery housing cover welding system according to some embodiments of the present application;
FIG. 9 is a schematic diagram of a first camera and a third camera performing scanning relative to a first edge and a third edge respectively according to some embodiments of the present application; and
FIG. 10 is a schematic diagram of a second camera and a fourth camera performing scanning relative to a second edge and a fourth edge respectively according to some embodiments of the present application.

Description of reference signs:
battery housing cover welding system 1000;
image acquisition assembly 100; first camera 110; second camera 120; third camera 130; fourth 140; mounting bracket 150; first vertical support portion 151; second vertical support portion 152; first horizontal support portion 153; hollow portion 1531; second horizontal support portion 154; bottom plate 155; guide rail 1551;
calibration block 500; battery profiling body 510; top surface 511; first edge 511-1; first side surface 512; second edge 511-2; second side surface 513; third edge 511-3; fourth edge 511-4; first surface feature 521; second surface feature 522; first surface feature portion 5211; second surface feature portion 5212; third surface feature portion 5213; fourth surface feature portion 5221; third surface feature 523; fourth surface feature 524; fifth surface feature portion 5222; sixth surface feature portion 5223; first dimension 522X of the sixth surface feature portion; second dimension 522Y of the sixth surface feature portion; seventh surface feature portion 5231; eighth surface feature portion 5232; ninth surface feature portion 5233; tenth surface feature portion 5241; eleventh surface feature portion 5242; twelfth surface feature portion 5243; first side surface feature 531; second side surface feature 532; first side surface feature portion 5311; second side surface feature portion 5312; third side surface feature portion 5313; fourth side surface feature portion 5321; fifth side surface feature portion 5322; sixth side surface feature portion 5323; fourth dimension 532Z of the sixth side surface feature portion; indicator 540.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

At present, in view of the development of the market, the use of power batteries is becoming increasingly more widespread. Power batteries. As an application field of power batteries continues to expand, a market demand for power batteries continues to increase.

With the development of modern industry, battery housing cover welding systems become increasingly important in the market. They play a crucial role of monitoring and ensuring product quality, safety, and performance in various industries, and also play a key role in production efficiency and cost control. For example, in manufacturing industry, the battery housing cover welding system can monitor properties of a product such as the size, shape, and appearance in real time on a production line through automatic and precise measurement and analysis, to ensure that a product reaches an expected quality level, which not only improves consistency and stability of the product, but also improves the competitiveness of a company in the market. The battery housing cover welding system are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace.

In the practical production activities, the battery housing cover welding system may have various faults, further resulting in defects or defective products. For example, a damaged light source, a contaminated lens, a loose cable connection, etc., may all affect the normal operation of the battery housing cover welding system. In this case, determining whether the battery housing cover welding system operates normally is a key link for ensuring stable and reliable operation of the battery housing cover welding system. By checking the battery housing cover welding system, some potential faults can be prevented, and a problem can be found and solved timely when it occurs. Only when the battery housing cover welding system operates normally, can the accuracy of measurement data collected by the battery housing cover welding system be ensured for subsequent quality analysis and improvement. An existing technique is checking the battery housing cover welding system manually. However, such a method is subjected to human subjectivity, and a check precision thereof is not guaranteed.

Based on the found technical problems, a battery housing cover welding system 1000 and a point check method 700 for the battery housing cover welding system 1000 are provided, which can accurately and effectively determine whether the battery housing cover welding system 1000 has a fault, so as to ensure that the battery housing cover welding system 1000 can operate stably and reliably.

The solution of the present disclosure is applied to the battery housing cover welding system 1000 in a production process of various batteries (e.g., a power battery or an energy storage battery, e.g., a square housing battery, a cylindrical battery, or a pouch battery, etc.).

The battery housing cover welding system 1000 and the point check method 700 of the present application are described below with reference to the accompanying drawings.

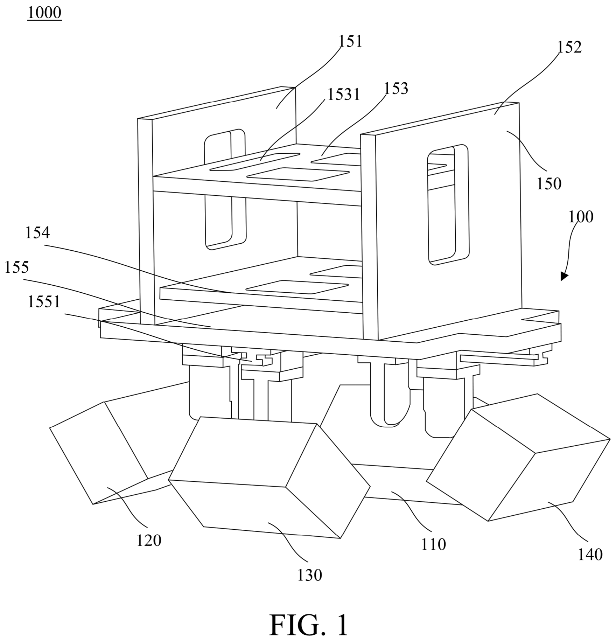

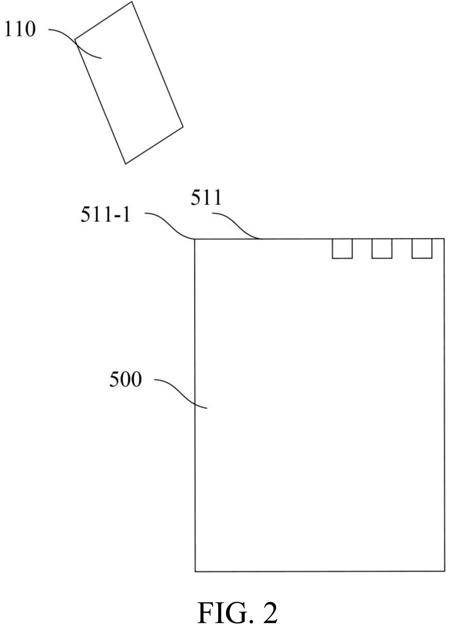

FIG. 1 is a schematic diagram of the battery housing cover welding system 1000 according to some embodiments of the present application, and FIG. 2 is a schematic front view of a relative position of a camera and a calibration block 500 according to some embodiments of the present application. The battery housing cover welding system 1000 is described in detail below with reference to FIGS. 1 and 2.

As shown in FIGS. 1 and 2, some embodiments of the present disclosure provide the battery housing cover welding system 1000, including: a calibration block 500 including a battery profiling body 510 which includes: a top surface 511, a first side surface 512 joined to the top surface 511 through a first edge 511-1, a second side surface 513 joined to the top surface 511 through a second edge 511-2, a third side surface (e.g., a side surface opposite to the first side surface 512, which is not shown) joined to the top surface 511 through a third edge 511-3, and a fourth side surface (e.g., a side surface opposite to the second side surface 513, which is not shown) joined to the top surface 511 through a fourth edge 511-4; a first surface feature 521, a second surface feature 522, a third surface feature 523, and a fourth surface feature 524 that are disposed near the first edge 511-1, the second edge 511-2, the third edge 511-3, and the fourth edge 511-4, respectively, and all located on the top surface 511; and a first side surface feature 531, a second side surface feature 532, a third side surface feature (e.g., similar to the first side surface feature, which is not shown), and a fourth side surface feature (e.g., similar to the second side surface feature, which is not shown) that are disposed near the first edge 511-1, the second edge 511-2, the third edge 511-3, and the fourth edge 511-4, respectively, and located on the first side surface 512, the second side surface 513, the third side surface, and the fourth side surface, respectively; an image acquisition assembly 100 including a first camera 110, a second camera 120, a third camera 130, and a fourth camera 140, where the first camera 110 is located diagonally above the first edge 511-1 and used to acquire check images of the first surface feature 521 and the first side surface feature 531, the second camera 120 is located diagonally above the second edge 511-2 and used to acquire check images of the second surface feature 522 and the second side surface feature 532, the third camera 130 is located diagonally above the third edge 511-3 and used to acquire check images of the third surface feature 523 and the third side surface feature, and the fourth camera 140 is located diagonally above the fourth edge 511-4 and used to acquire check images of the fourth surface feature 524 and the fourth side surface feature; and a host computer (not shown) configured to determine a hardware point check result of the image acquisition assembly 100 based on the check images acquired by the image acquisition assembly 100.

The top surface 511 refers to an upper surface of the calibration block 500 in a placement direction during acquisition of an image for the image acquisition assembly, i.e., a surface opposite to a surface on which the calibration block is placed, so that the image acquisition assembly 100 diagonally above the calibration block can acquire surface features on the top surface.

The battery profiling body 510 refers to a profiling member having a shape and dimensions the same as or similar to those of a battery. Since the battery housing cover welding system 1000 is used to check welding quality of a battery housing cover, setting the shape and dimensions of the calibration block 500 to be the same as or similar to the shape and dimensions of a battery may improve the accuracy of a check of the battery housing cover welding system 1000 for the battery. When the battery is a rectangular cuboid or a cube, the battery profiling body 510 includes: the top surface 511, and the first side surface 512, the second side surface 513, the third side surface, and the fourth side surface that are joined to four edges (i.e., the first edge 511-1, the second edge 511-2, the third edge 511-3, and the fourth edge 511-4) of the top surface 511 respectively. In this case, the first edge 511-1, the second edge 511-2, the third edge 511-3, and the fourth edge 511-4 form the top surface 511 by surrounding.

The first surface feature 521 is disposed on at a position on the top surface 511 of the battery profiling body 510 near the first edge 511-1, the second surface feature 522 is disposed at a position on the top surface 511 of the battery profiling body 510 near the second edge 511-2, a third surface feature 523 is disposed at a position on the top surface 511 of the battery profiling body 510 near the third edge 511-3, and a fourth surface feature 524 is disposed at a position on the top surface 511 of the battery profiling body 510 near the fourth edge 511-4.

The first side surface feature 531 is disposed at a position on the first side surface 512 of the battery profiling body 510 near the first edge 511-1, the second side surface feature 532 is disposed at a position on the second side surface 513 of the battery profiling body 510 near the second edge 511-2, the third side surface feature (e.g., similar to the first side surface feature, which is not shown) is disposed at a position on the third side surface of the battery profiling body 510 near the third edge 511-3, and a fourth side surface feature (e.g., similar to the second side surface feature, which is not shown) is disposed at a position on the fourth side surface of the battery profiling body 510 near the fourth edge 511-4.

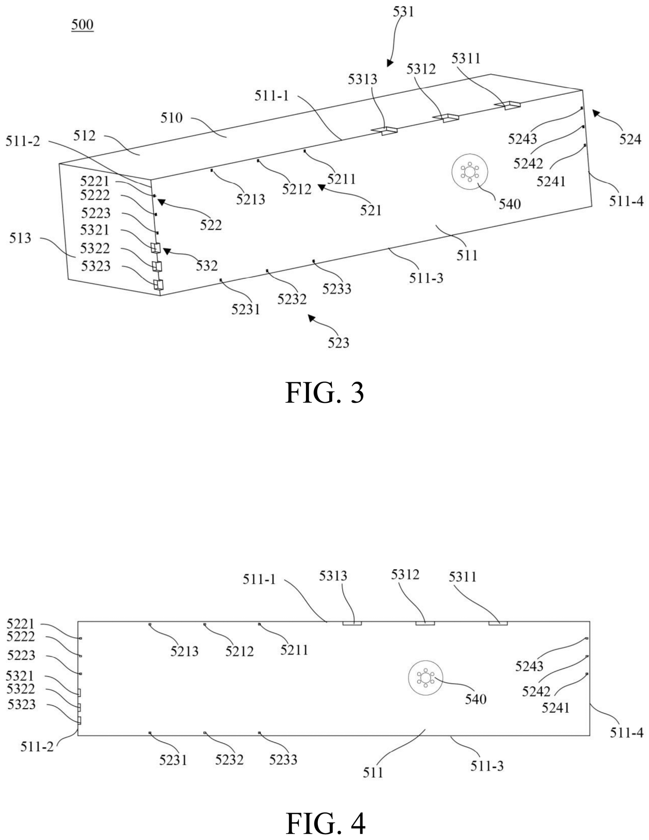

As shown in FIG. 3, the surface features and the side surface features on the battery profiling block may be set to be grooves, protrusions, etc., and cross-sectional shapes thereof may be rectangular, square, circular, etc. For example, they may be obtained by laser lithography or a numerically controlled milling machine. The structures and shapes of the first surface feature 521, the second surface feature 522, the third surface feature 523, the fourth surface feature 524, the first side surface feature 531, the second side surface feature 532, the third side surface feature, and the fourth side surface feature may be identical to each other, or partially identical to each other and partially different from each other, or completely different from each other.

As used herein, "near" may mean that two portions are in close proximity, or two components abut against or are fitted to each other. As shown in FIG. 3, the second surface feature 522 is disposed near the second edge 511-2, i.e., in close proximity to the second edge 511-2. The second side surface feature 532 is disposed near the second edge 511-2, i.e., a side of the second side surface feature 532 is fitted to the second edge 511-2. When the second side surface feature 532 is set to be a groove, a portion of the groove is exposed on the top surface 511.

Specific types of the first camera 110, the second camera 120, the third camera 130, and the fourth camera 140 are not limited. For example, the first camera 110, the second camera 120, the third camera 130, and the fourth camera 140 may be a charge coupled device (CCD) industrial camera, a complementary metal-oxide semiconductor (CMOS) industrial camera, etc., or may be, for example, a linear array camera, an area array camera, etc. The first camera 110, the second camera 120, the third camera 130, and the fourth camera 140 may be cameras of the same type, or cameras of different types, etc. When the image acquisition assembly 100 includes a light source, the light source may be disposed outside the camera or integrated with the camera.

Scanning modes of first camera 110, the second camera 120, the third camera 130, and the fourth camera 140 may be various, and the specific types are not limited, as along as dimension information can be acquired from the calibration block to determine whether the battery housing cover welding system 1000 has a fault. The specific scanning mode may be, for example, row-by-row or column-by-column scanning, depth scanning, area scanning, and the like.

In some examples, as shown in FIG. 1, the image acquisition assembly 100 may further include a mounting bracket 150, where the first camera 110, the second camera 120, the third camera 130, and the fourth camera 140 are connected to the mounting bracket 150 and movable relative to the mounting bracket.

In some examples, as shown in FIG. 1, the mounting bracket 150 includes a first vertical support portion 151, a second vertical support portion 152, a first horizontal support portion 153, a second horizontal support portion 154, and a bottom plate 155. The first camera 110, the second camera 120, the third camera 130, and the fourth camera 140 are movably connected to the bottom plate 155. In some examples, a guide rail 1551 is disposed on the bottom plate 155. The first camera 110, the second camera 120, the third camera 130, and the fourth camera 140 may be moved along the guide rail 1551 relative to the mounting bracket 150. In some examples, the first vertical support portion 151 and the second vertical support portion 152 are disposed in parallel and spaced apart by a distance, and are both perpendicular to and fixed on the bottom plate 155. In some examples, the first horizontal support portion 153 and the second horizontal support portion 154 are disposed in parallel and spaced apart by a distance between the first vertical support portion 151 and the second vertical support portion 152. The first horizontal support portion 153 and the second horizontal support portion 154 are also parallel to the bottom plate 155. In some other embodiments, the mounting bracket may include only one or more than two vertical support portions and/or only one or more than two horizontal support portions. Further, the vertical support portions may also be disposed non-perpendicular to the bottom plate, the two vertical support portions may also be disposed non-parallel to each other. Similarly, the horizontal support portions may also be disposed non-parallel to the bottom plate, and the two horizontal support portions may also be disposed non-parallel to each other. The present disclosure is not limited thereto.

In some examples, at least one of the first vertical support portion 151, the second vertical support portion 152, the first horizontal support portion 153, and the second horizontal support portion 154 may be provided with a hollow portion to reduce the weight of the mounting bracket. For example, as shown in FIG. 1, the first horizontal support portion 153 is provided with a hollow portion 1531.

As shown in FIGS. 1 and 3, since the first edge 511-1 and the third edge 511-3 are disposed oppositely, the second edge 511-2 and the fourth edge 511-4 are disposed oppositely, and the four cameras acquire images of surfaces joined by these edges, respectively, the first camera 110 and the third camera 130 are disposed oppositely, and the second camera 120 and the fourth camera 140 are disposed oppositely.

When the image acquisition assembly 100 acquires images of the calibration block 500, the first camera 110 is located diagonally above the first edge 511-1. For example, as shown in FIG. 2, the first camera 110 is located on an outer side of the first edge 511-1 (i.e., the calibration block 500) and above the first edge 511-1. Similarly, cases of the second camera 120 located diagonally above the second edge 511-2, the third camera 130 located diagonally above the third edge 511-3, and the fourth camera 140 located diagonally above the fourth edge 511-4 are the same as the case of the first camera 110, which will not be described in detail here. In some embodiments, the camera may be moved along a corresponding near edge, and may be rotated (e.g., rotated within an angular range (e.g., a range of about 32° between left and right), or within a range of 360°) around an axis thereof that coincides with an extension direction of the corresponding near edge, so as to better acquire check images of a corresponding surface feature and side surface feature.

The top surface 511 and the four side surfaces of the battery profiling body 510 of the calibration block 500 are each provided with corresponding surface features and side surface features, to facilitate a point check of the four cameras at specific positions of the image acquisition assembly 100, making it possible to determine whether the image acquisition assembly 100 of the battery housing cover welding system 1000 has a fault. Accordingly, a problem may be found and solved timely, to ensure normal operation of the battery housing cover welding system 1000, improving the measurement accuracy and reliability, and thereby ensuring the accuracy of a hardware point check result. Compared with a conventional manual measurement method, the embodiment described above reduces manual intervention, not only improving a check speed and thereby improving production efficiency, but also reducing the possibility of an artificial error.

According to some embodiments of the present application, each of the first surface feature 521, the second surface feature 522, the third surface feature 523, and the fourth surface feature 524 includes a plurality of surface feature portions spaced apart in an extension direction of a corresponding near edge among the first edge 511-1, the second edge 511-2, the third edge 511-3, and the fourth edge 511-4; and each of the first side surface feature 531, the second side surface feature 532, the third side surface feature, and the fourth side surface feature includes a plurality of side surface feature portions spaced apart in an extension direction of a corresponding near edge among the first edge 511-1, the second edge 511-2, the third edge 511-3, and the fourth edge 511-4.

As shown in FIGS. 3 to 5, the first surface feature 521 near the first edge 511-1 includes a plurality of surface feature portions, e.g., a first surface feature portion 5211, a second surface feature portion 5212, and a third surface feature portion 5213, which are spaced apart on the top surface 511 in an extension direction of the first edge 511-1. The second surface feature 522 near the second edge 511-2 includes a plurality of surface feature portions, e.g., a fourth surface feature portion 5221, a fifth surface feature portion 5222, and a sixth surface feature portion 5223, which are spaced apart on the top surface 511 in an extension direction of the second edge 511-2. The third surface feature 523 near the third edge 511-3 includes a plurality of surface feature portions, e.g., a seventh surface feature portion 5231, an eighth surface feature portion 5232, and a ninth surface feature portion 5233, which are spaced apart on the top surface 511 in an extension direction of the third edge 511-3. The fourth surface feature 524 near the fourth edge 511-4 includes a plurality of surface feature portions, e.g., a tenth surface feature portion 5241, an eleventh surface feature portion 5242, and a twelfth surface feature portion 5243, which are spaced apart on the top surface 511 in an extension direction of the fourth edge 511-4.

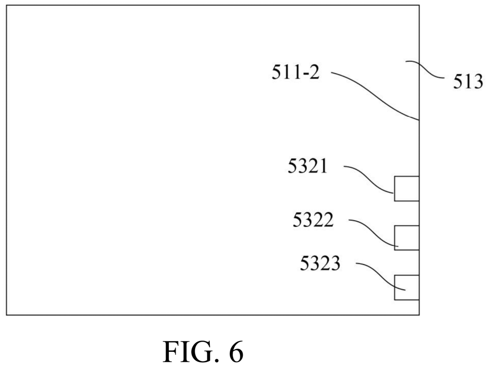

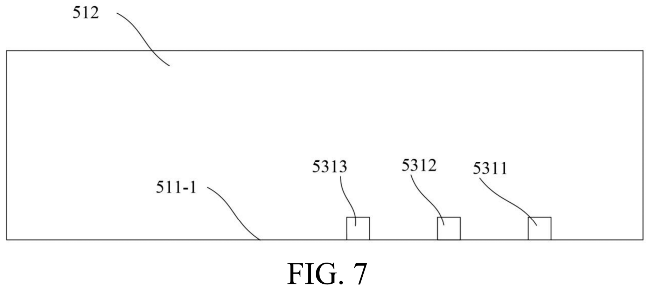

As shown in FIGS. 3, 6, and 7, the first side surface feature 531 near the first edge 511-1 includes a plurality of side surface feature portions, e.g., a first side surface feature portion 5311, a second side surface feature portion 5312, and a third side surface feature portion 5313, which are spaced apart on the first side surface 512 in the extension direction of the first edge 511-1. The second side surface feature 532 near the second edge 511-2 includes a plurality of side surface feature portions, e.g., a fourth side surface feature portion 5321, a fifth side surface feature portion 5322, and a sixth side surface feature portion 5323, which are spaced apart on the second side surface in the extension direction of the second edge 511-2. The third side surface feature near the third edge 511-3 includes a plurality of side surface feature portions (not shown), which are spaced apart on the third side surface in the extension direction of the third edge 511-3. The fourth side surface feature near the fourth edge 511-4 includes a plurality of surface feature portions (not shown), which are spaced apart on the fourth side surface in the extension direction of the fourth edge 511-4.

A spacing of the spaced arrangement described above may be determined according to a check precision of the corresponding camera.

As described above, by providing a plurality of surface feature portions and a plurality of side surface feature portions on each of the top surface 511 and the four side surfaces of the battery profiling body 510, all of which are spaced apart along the corresponding near edges, the image acquisition assembly may be enabled to not only obtain images of a plurality of feature portions more accurately, but also obtain the images of the plurality of features at one time, thereby effectively improving the point check efficiency and the accuracy of subsequently determining whether the battery housing cover welding system 1000 has a fault.

Alternatively, the plurality of surface feature portions and the plurality of side surface feature portions may not be spaced apart on the corresponding surface where they are located along the corresponding near edge.

According to some embodiments of the present application, the plurality of surface feature portions each include first dimensions parallel to the corresponding near edge and the top surface and second dimensions perpendicular to the corresponding near edge and parallel to the top surface, where either the first dimensions or the second dimensions of the plurality of surface feature portions vary along an extension direction of the corresponding near edge according to a first preset variation rule; and the plurality of side surface feature portions each include fourth dimensions perpendicular to a corresponding side surface where the side surface feature portions are located among the first side surface, the second side surface, the third side surface, and the fourth side surface, where the fourth dimensions of the plurality of side surface features vary along an extension direction of the corresponding near edge according to a second preset variation rule.

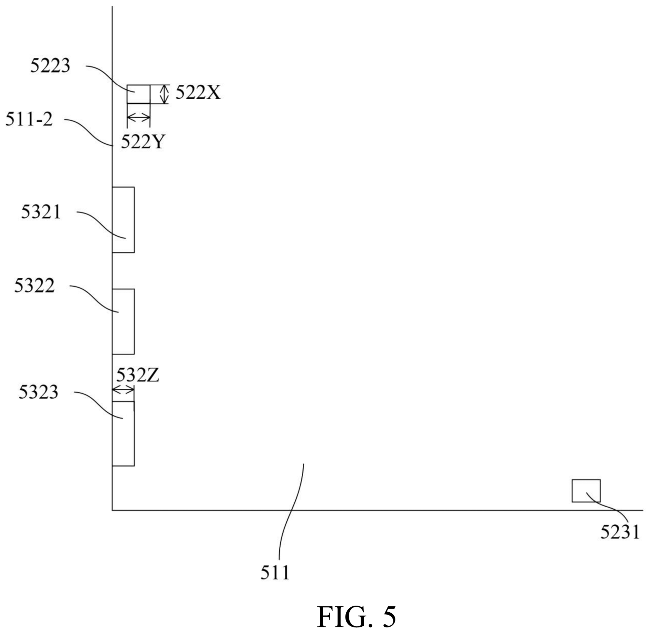

As shown in FIG. 5, taking the sixth surface feature portion 5223 as an example, the sixth surface feature portion 5223 includes a first dimension 522X, i.e., a length dimension, parallel to the second edge 522-2 and the top surface 511, and a second dimension 522Y, i.e., a width dimension, perpendicular to the second edge 511-2 and parallel to the top surface 511.

As shown in FIG. 5, taking the sixth side surface feature portion as an example, the sixth side surface feature portion 5323 includes a fourth dimension 532Z, i.e., a depth dimension, perpendicular to the second side surface 513.

When the side surface feature portion is a groove, the fourth dimension may be a depth by which the side surface feature portion is recessed relative to the side surface where the side surface feature portion is located. In addition, when the side surface feature is a protrusion, the fourth dimension may alternatively be a height by which the side surface feature portion protrudes relative to the side surface where the side surface feature portion is located.

The type of first preset variation rule is not limited. For example, numerical values of either the first dimensions or the second dimensions of the plurality of surface feature portions may be in an ascending or descending order with equal differences, vary proportionally by a slope and an intercept (where the slope is not 0), etc. Specifically, for example, the first dimensions of a plurality of surface feature portions disposed near the second edge 511-2 vary by a fixed difference, that is, the first dimensions of the fourth surface feature portion 5221, the fifth surface feature portion 5222, and the sixth surface feature portion 5223 are sequentially in an ascending order with a fixed difference, e.g., 0.8 millimeter (mm), 1.0 mm, and 1.2 mm, respectively. For another example, the second dimensions of the plurality of surface feature portions vary by a fixed difference, that is, the second dimensions of the seventh surface feature portion, the eighth surface feature portion, and the ninth surface feature portion are sequentially in an ascending order with a fixed difference, e.g., 0.8 mm, 1.0 mm, and 1.2 mm, respectively.

The type of second preset variation rule is not limited. For example, numerical values of the fourth dimensions of the plurality of side surface feature portions may be in an ascending or descending order with equal differences, vary proportionally with a slope and an intercept (where the slope is not 0), etc. Specifically, for example, the fourth dimensions of the fourth side surface feature, the fifth side surface feature, and the sixth side surface feature vary by a fixed difference, that is, the fourth dimensions of the fourth side surface feature portion 5321, the fifth side surface feature portion 5322, and the sixth side surface feature portion 5323 are sequentially in an ascending order with a fixed difference, e.g., 0.02 mm, 0.06 mm, and 0.10 mm, respectively. The variation rule of the first dimensions, the second dimensions/the fourth dimension may be set as required.

During practical use of an industrial camera, a data offset may occur, and the offset may be classified into two types, namely a linear offset and a non-linear offset. The linear offset means that measured data has a linear feature the same as that of an actual value (e.g., a measured variation rule of measured data of the first dimensions of the plurality of surface feature portions is consistent with an actual variation rule of actual data). The linear offset may be corrected by compensation, i.e., a fixed value, and is acceptable in practical production. Therefore, after the preset variation rule is set, whether the battery housing cover welding system 1000 has a fault may be determined based on a variation rule of actual data and a variation rule of measured data.

The specific dimensions of the surface features and the side surface features on the battery profiling body 510 provided in this embodiment are subjected to preset variation rules. As such, the check no longer depends on comparison with a single measurement value, making the check more robust, and an operating state of the battery housing cover welding system 1000 may be determined more accurately, thereby improving the precision and reliability of fault diagnosis.

According to some embodiments of the present application, the plurality of surface feature portions each further include third dimensions perpendicular to the top surface, where the others of the first dimensions and the second dimensions of the plurality of surface feature portions are equal to each other, and the third dimensions of the plurality of surface feature portions are equal to each other; and the plurality of side surface feature portions each further include fifth dimensions parallel to the corresponding side surface where the side surface feature portions are located and the corresponding near edge and sixth dimensions parallel to the corresponding side surface where the side surface feature portions are located and perpendicular to the corresponding near edge, where the fifth dimensions of the plurality of side surface feature portions are equal to each other, and the sixth dimensions of the plurality of side surface feature portions are equal to each other.

As for the third dimension, taking the sixth surface feature portion as an example, the sixth surface feature portion further includes a third dimension perpendicular to the top surface 511, the features of which are the same as those of the fourth dimension, except that the third dimension is perpendicular to a different surface. It is not shown here.

As for the fifth dimension and the sixth dimension, taking the sixth side surface feature portion as an example, the sixth side surface feature portion further includes a fifth dimension parallel to the second side surface 513 and the second edge 511-2, and a sixth dimension parallel to the second side surface 513 and perpendicular to the second edge 511-2, the features of which are the same as those of the first dimension and the second dimension, except that the fifth dimension and sixth dimension are each parallel to a different surface. They are not shown here.

Taking the second surface feature 522 as an example, the first dimensions of the fourth surface feature portion 5221, the fifth surface feature portion 5222, and the sixth surface feature portion 5223 are sequentially in an ascending order with a fixed difference, e.g., 0.8 mm, 1.0 mm, and 1.2 mm, respectively; the second dimensions of the fourth surface feature portion 5221, the fifth surface feature portion 5222, and the sixth surface feature portion 5223 are equal to each other, e.g., 1 mm, etc.; and the third dimensions of the fourth surface feature portion 5221, the fifth surface feature portion 5222, and the sixth surface feature portion 5223 are equal to each other, e.g., 0.2 mm, etc.

Taking the second side surface 513 feature as an example, the fourth dimensions of the fourth side surface feature portion 5321, the fifth side surface feature portion 5322, and the sixth side surface feature portion 5323 are sequentially in an ascending order with a fixed difference, e.g., 0.02 mm, 0.06 mm, and 0.10 mm, respectively; the fifth dimensions of the fourth side surface feature portion 5321, the fifth side surface feature portion 5322, and the sixth side surface feature portion 5323 are equal to each other; and the sixth dimensions of the fourth side surface feature portion 5321, the fifth side surface feature portion 5322, and the sixth side surface feature portion 5323 are equal to each other.

The implementation described above, by setting the other dimensions of the plurality of surface feature portions/side surface feature portions to be equal to each other, enables the host computer to determine the hardware point check result without considering these dimensions kept to be equal, thereby improving the point check efficiency.

According to some embodiments of the present application, the host computer is configured to: determine a point check determination parameter based on check images acquired by the first camera 110, the second camera 120, the third camera 130, and the fourth camera 140, and determine the hardware point check result based on the point check determination parameter, where the point check determination parameter includes check values of either the first dimensions or the second dimensions of the plurality of surface feature portions of each surface feature and check values of the fourth dimensions of the plurality of side surface feature portions of each side surface feature.

That is, for example, taking the second camera 120 as an example, the host computer determines the point check determination parameter based on the check images acquired by the second camera 120, where the point check determination parameter includes check values of the first dimensions of the plurality of surface feature portions of the second surface feature 522 that vary according to the first preset variation rule and check values of the fourth dimensions of the plurality of side surface feature portions of the second side surface feature 532 that vary according to the second preset variation rule. Then the host computer determines the hardware point check result based on the point check determination parameter. For example, the hardware point check result is determined based on the point check determination parameter, actual values of the first dimensions of the plurality of surface feature portions of the second surface feature 522, and actual values of the fourth dimensions of the plurality of side surface feature 532 portions of the second side surface feature 532. For example, check values of the first dimensions of the plurality of surface feature portions of the second surface feature 522 and check values of the fourth dimensions of the plurality of side surface feature portions of the second side surface feature 532 are compared with actual values of the first dimensions and the fourth dimensions, respectively, and the hardware point check result is determined based on a result (e.g., whether the check value is consistent with the actual value, whether the check value falls within a tolerance or standard deviation of the corresponding actual value, etc.) of the comparison. Alternatively, the hardware point check result may also be determined based on whether the check values of the first dimensions of the plurality of surface feature portions of the second surface feature 522 and the check values of the fourth dimensions of the plurality of side surface feature portions of the second side surface feature 532 satisfy the first preset variation rule and the second preset variation rule, respectively. Alternatively, the hardware point check result may also be determined based on whether products (i.e., areas) of the check values of the first dimensions and the check values of the second dimensions of the plurality of surface feature portions of the second surface feature 522, and the check values of the fourth dimensions of the plurality of side surface feature portions of the second side surface feature 532 satisfy the first preset variation rule and the second preset variation rule, respectively (e.g., a variation rule of the check values/the products of the check values is consistent with or similar to the preset variation rule, etc.). Additionally, the point check determination parameter may further include at least one of a check value of the third dimension of the plurality of surface feature portions of each surface feature and check values of the sixth dimension and the seventh dimension of the plurality of side surface feature portions of each side surface feature.

The implementation described above enables the host computer to obtain, based on the check images acquired by the image acquisition unit when determining the hardware point check result, only the dimensions of the plurality of surface feature portions/side surface feature portions that vary according to the preset variation rule, thereby improving the point check efficiency.

According to some embodiments of the present application, the host computer is further configured to determine a software point check result of visual check software in the host computer, including: obtaining at least one defect image of a battery housing cover that includes at least one welding defect; determining a defect check result of the at least one defect image through the visual check software; and determining the software point check result of the battery housing cover welding system based on the defect check result.

The defect image may be collected during a practical check of a workpiece using the battery housing cover welding system 1000, or may be obtained from a sample image library collected from operation history of the battery housing cover welding system 1000. The specific collection of sample images may be classified collection by manual verification in a quality check department, or may be automatic recognition and storage by the battery housing cover welding system 1000.

In addition, the defect check result of this embodiment may be type information of the welding defect, number information of the welding defect, shape description of the welding defect, optical information (such as color and texture) of the welding defect, confidence of the welding defect result, etc. The software point check result may be determined based on the defect check result and an actual defect situation of the defect image. For example, they are compared with each other, and the software point check result is determined based on a result of the comparison (e.g., whether they are consistent with each other, whether a difference or ratio between them is within a preset threshold, etc.). Alternatively, the software point check result may be determined based on whether the defect check result satisfies a specific requirement.

The visual check software is a functional module in the battery housing cover welding system 1000 for determining whether an image acquired by the image acquisition assembly 100 includes a defect.

The sample image of this embodiment includes a welding defect of at least one type, which may be a defect such as a pseudo welding or intermittent welding of the battery housing cover that is detected by the battery housing cover welding system 1000.

The implementation described above obtains the defect check result of the preset defect picture using the visual check software of the host computer, and may determine the software point check result of the visual check software of the battery housing cover welding system 1000 based on the defect check result. Accordingly, a problem may be found and solved timely, to ensure normal operation of the battery housing cover welding system 1000, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

An indicator is also provided on the top surface to indicate a placement direction of the calibration block relative to the image acquisition assembly.

As shown in FIGS. 3 and 4, the top surface 511 is provided with the indicator used for indicating a feeding direction, that is, an end provided with the indicator is directed towards the camera, so that the end directed towards the camera may first enter a scanning range of the camera. As such, the camera may be enabled to scan the surface features and the side surface features according to a preset order. The indicator may be in any shape, e.g., a shape formed by arranging several circular features as shown in FIG. 3, a linear score, etc.

The implementation described above may ensure that the image acquisition assembly 100 sequentially acquires the check images of the surface feature portions and the side surface feature portions at specific positions for comparison with theoretical dimensions of the surface feature portions and the side surface feature portions at the corresponding positions that are pre-stored in the system. As such, the accuracy of the point check result may be ensured.

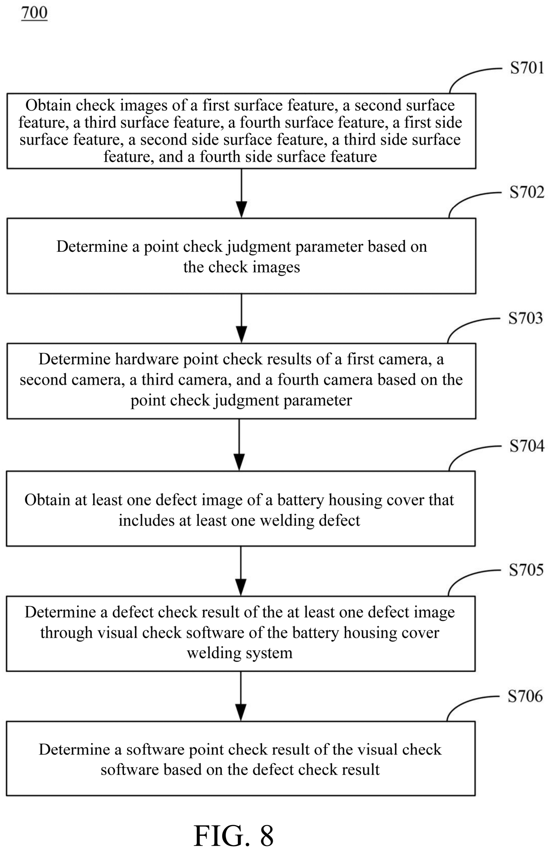

As shown in FIG. 8, according to a second aspect, an embodiment of the present application provides (as shown in FIGS. 1 to 7) a point check method 700 for the battery housing cover welding system 1000, where the point check method 700 is performed in the battery housing cover welding system 1000 according to the present disclosure, and the point check method 700 includes: step S701: obtaining check images of a first surface feature, a second surface feature, a third surface feature, a fourth surface feature, a first side surface feature, a second side surface feature, a third side surface feature, and a fourth side surface feature; step S702: determining a point check determination parameter based on the check images; step S703: determining hardware point check results of a first camera, a second camera, a third camera, and a fourth camera based on the point check determination parameter; step S704: obtaining at least one defect image of a battery housing cover that includes at least one welding defect; step S705: determining a defect check result of the at least one defect image through visual check software of the battery housing cover welding system; and step S706 determining a software point check result of the visual check software based on the defect check result.

The method described above may be performed at a host computer of the battery housing cover welding system 1000.

The point check determination parameter includes check values of either the first dimensions or the second dimensions of the plurality of surface feature portions of each surface feature and check values of the fourth dimensions of the plurality of side surface feature portions of each side surface feature.

For example, taking the second camera 120 as an example, the host computer determines the point check determination parameter based on the check images acquired by the second camera 120, where the point check determination parameter includes check values of the first dimensions of the plurality of surface feature portions of the second surface feature 522 that vary according to the first preset variation rule and check values of the fourth dimensions of the plurality of side surface feature portions of the second side surface feature 532 that vary according to the second preset variation rule. Then the host computer determines the hardware point check result based on the point check determination parameter. For example, the hardware point check result is determined based on the point check determination parameter, actual values of the first dimensions of the plurality of surface feature portions of the second surface feature 522, and actual values of the fourth dimensions of the plurality of side surface feature 532 portions of the second side surface feature 532. For example, check values of the first dimensions of the plurality of surface feature portions of the second surface feature 522 and check values of the fourth dimensions of the plurality of side surface feature portions of the second side surface feature 532 are compared with actual values of the first dimensions and the fourth dimensions, respectively, and the hardware point check result is determined based on a result (e.g., whether the check value is consistent with the actual value, whether the check value falls within a tolerance or standard deviation of the corresponding actual value, etc.) of the comparison. Alternatively, the hardware point check result may also be determined based on whether the check values of the first dimensions of the plurality of surface feature portions of the second surface feature 522 and the check values of the fourth dimensions of the plurality of side surface feature portions of the second side surface feature 532 satisfy the first preset variation rule and the second preset variation rule, respectively. Alternatively, the hardware point check result may also be determined based on whether products (i.e., areas) of the check values of the first dimensions and the check values of the second dimensions of the plurality of surface feature portions of the second surface feature 522, and the check values of the fourth dimensions of the plurality of side surface feature portions of the second side surface feature 532 satisfy the first preset variation rule and the second preset variation rule, respectively (e.g., a variation rule of the check values/the products of the check values is consistent with or similar to the preset variation rule, etc.). Additionally, the point check determination parameter may further include at least one of a check value of the third dimension of the plurality of surface feature portions of each surface feature and check values of the sixth dimension and the seventh dimension of the plurality of side surface feature portions of each side surface feature.

Additionally, the point check determination parameter may further include at least one of a check value of the third dimension of the plurality of surface feature portions of each surface feature and check values of the sixth dimension and the seventh dimension of the plurality of side surface feature portions of each side surface feature.

The defect image may be collected during a practical check of a workpiece using the battery housing cover welding system 1000, or may be obtained from a sample image library collected from operation history of the battery housing cover welding system 1000. The specific collection of sample images may be classified collection by manual verification in a quality check department, or may be automatic recognition and storage by the battery housing cover welding system 1000.

In addition, the defect check result of this embodiment may be type information of the welding defect, number information of the welding defect, shape description of the welding defect, optical information (such as color and texture) of the welding defect, confidence of the welding defect result, etc. The sample image of this embodiment includes a welding defect of at least one type, which may be a defect such as a pseudo welding or intermittent welding of the battery housing cover that is detected by the battery housing cover welding system 1000. The software point check result may be determined based on the defect check result and an actual defect situation of the defect image. For example, they are compared with each other, and the software point check result is determined based on a result of the comparison (e.g., whether they are consistent with each other, whether a difference or ratio between them is within a preset threshold, etc.). Alternatively, the software point check result may be determined based on whether the defect check result satisfies a specific requirement.

The visual check software is a functional module in the battery housing cover welding system 1000 for determining whether an image acquired by the image acquisition assembly 100 includes a defect.

The system in the implementation described above determines the hardware point check result of the system by obtaining the check images of the surface feature portions and the side surface feature portions on the calibration block 500 and obtaining the point check determination parameter based on the check images, obtains the defect check result of the preset defect image using the visual check software of the host computer, and determines the software point check result of the visual check software of the battery housing cover welding system 1000 based on the defect check result. In this way, a problem may be found and solved timely, to ensure normal operation of the battery housing cover welding system 1000, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

According to some embodiments of the present application, the first camera 110 and the third camera 130 are disposed oppositely, the second camera 120 and the fourth camera 140 are disposed oppositely, and step S701 of obtaining the check images of the first surface feature, the second surface feature, the third surface feature, the fourth surface feature, the first side surface feature, the second side surface feature, the third side surface feature, and the fourth side surface feature includes: causing the first camera and the third camera to be moved relative to an extension direction of the first edge and an extension direction of the third edge, respectively, to acquire check images of the first surface feature, the first side surface feature, the third surface feature, and the third side surface feature; and causing the second camera and the fourth camera to be moved relative to an extension direction of the second edge and an extension direction of the fourth edge, respectively, to acquire check images of the second surface feature, the second side surface feature, the fourth surface feature, and the fourth side surface feature.

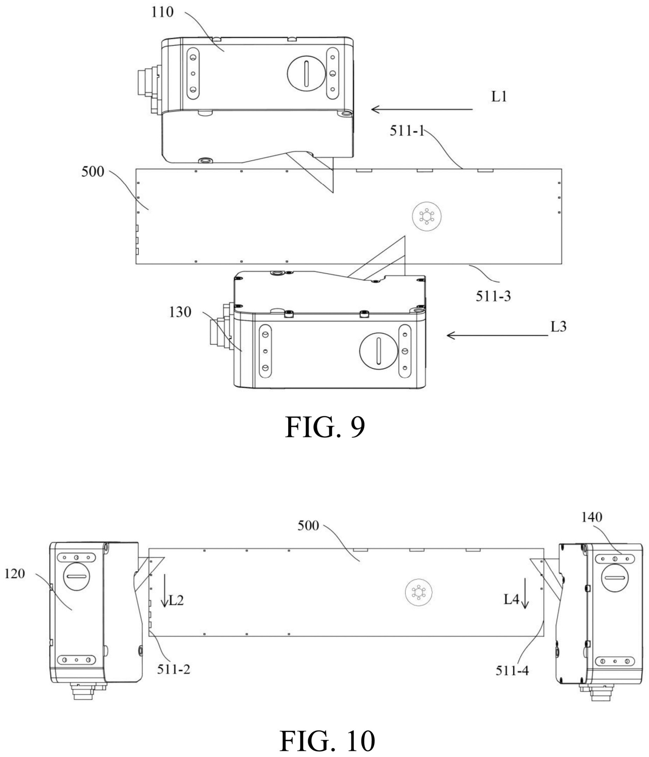

As shown in FIG. 9, the first camera 110 and the third camera 130 are caused to be moved (e.g., simultaneously or sequentially, where movement directions of the two cameras may be the same or opposite) relative to the extension direction of the first edge 511-1 and the extension direction of the third edge 511-3, respectively, to acquire the check images of the first surface feature, the first side surface feature, the third surface feature, and the third side surface feature. Herein, "movement" refers to relative movement, that is, the movement may be movement of the camera or movement of the calibration block 500. Causing the first camera 110 and the third camera 130 to be moved relative to the extension direction of the first edge 511-1 and the extension direction of the third edge 511-3 respectively may refer to moving the first camera 110 and the third camera 130 along the extension direction L1 of the first edge 511-1 and the extension direction L3 of the third edge 511-3, respectively, or moving the calibration block 500 relative to the extension direction of the first edge 511-1 and the extension direction of the third edge 511-3 while the first camera 110 and the third camera 130 are stationary.

Next, as shown in FIG. 10, the second camera 120 and the fourth camera 140 are caused to be moved (e.g., simultaneously or sequentially, where movement directions of the two cameras may be the same or opposite) relative to the extension direction of the second edge 511-2 and the extension direction of the fourth edge 511-4, respectively, to acquire the check images of the second surface feature, the second side surface feature, the fourth surface feature, and the fourth side surface feature. Herein, "movement" refers to relative movement, that is, the movement may be movement of the camera or movement of the calibration block. Causing second camera 120 and the fourth machine 140 to be moved relative to the extension direction of the second edge 511-2 and the extension direction of the fourth edge 511-4 respectively may refer to moving the second camera 120 and the fourth machine 140 along the extension direction L2 of the second edge 511-2 and the extension direction L4 of the fourth edge 511-4, respectively, or moving the calibration block 500 along the extension direction of the second edge 511-2 and the extension direction of the fourth edge 511-4 while the second camera 120 and the fourth machine 140 are stationary.

The implementation described above enables two of the cameras disposed oppositely to be moved relative to the corresponding edges to acquire the check images, and then enables the other two cameras disposed oppositely to be moved relative to the corresponding edges to acquire the check images, thereby improving the efficiency of acquiring the check images while preventing the cameras from interfering with each other during the movement.

According to some embodiments of the present application, each of the first surface feature, the second surface feature, the third surface feature, and the fourth surface feature includes a plurality of surface feature portions, and the plurality of surface feature portions each include first dimensions parallel to a corresponding near edge among the first edge, the second edge, the third edge, and the fourth edge and the top surface and second dimensions perpendicular to the corresponding near edge and parallel to the top surface, where either the first dimensions or the second dimensions of the plurality of surface feature portions vary according to a first preset variation rule; each of the first side surface feature, the second side surface feature, the third side surface feature, and the fourth side surface feature includes a plurality of side surface feature portions, and the plurality of side surface feature portions each include fourth dimensions perpendicular to a corresponding side surface where the side surface feature portions are located among the first side surface, the second side surface, the third side surface, and the fourth side surface, where the fourth dimensions of the plurality of side surface features vary according to a second preset variation rule; and where the point check determination parameter includes check values of either the first dimensions or the second dimensions of the plurality of surface feature portions of each surface feature and check values of the fourth dimensions of the plurality of side surface feature portions of each side surface feature.

For example, taking the second camera 120 as an example, the host computer determines the point check determination parameter based on the check images acquired by the second camera 120, where the point check determination parameter includes check values of the first dimensions of the plurality of surface feature portions of the second surface feature 522 that vary according to the first preset variation rule and check values of the fourth dimensions of the plurality of side surface feature portions of the second side surface feature 532 that vary according to the second preset variation rule. Then the hardware point check result may be determined based on whether the check values of the first dimensions of the plurality of surface feature portions of the second surface feature 522 and the check values of the fourth dimensions of the plurality of side surface feature portions of the second side surface feature 532 satisfy the first preset variation rule and the second preset variation rule, respectively. Alternatively, the hardware point check result may also be determined based on whether products (i.e., areas) of the check values of the first dimensions and the check values of the second dimensions of the plurality of surface feature portions of the second surface feature 522, and the check values of the fourth dimensions of the plurality of side surface feature portions of the second side surface feature 532 satisfy the first preset variation rule and the second preset variation rule, respectively (e.g., a variation rule of the check values/the products of the check values is consistent with or similar to the preset variation rule, etc.).

The implementation described above enables the obtaining, based on the check images acquired by the image acquisition unit in determining the hardware point check result, of only the dimensions of the plurality of surface feature portions/side surface feature portions that vary according to the preset variation rule, thereby improving the point check efficiency.

According to some embodiments of the present application, step S703 of determining the hardware point check results of the first camera, the second camera, the third camera, and the fourth camera based on the point check determination parameter includes: for each surface feature, determining a first check variation rule of the plurality of surface feature portions of the surface feature based on the check values of either the first dimensions or the second dimensions of the plurality of surface feature portions of the surface feature; for each side surface feature, determining a second check variation rule of the plurality of side surface feature portions of the side surface feature based on check values of the fourth dimensions of the plurality of side surface feature portions of the side surface feature; comparing the first check variation rule of each surface feature and the second check variation rule of each side surface feature with the first preset variation rule of the surface feature and the second preset variation rule of the side surface feature, respectively; and determining whether the hardware point check result is passed based on a result of the comparison.

In response to a variation rule of check values of the first dimensions/second dimensions of a plurality of surface feature portions of a surface feature and/or a variation rule of check values of the fourth dimensions of a plurality of side surface feature portions of a side surface feature being, for example, inconsistent with or not close to the first preset variation rule and the second preset variation rule, respectively, it is determined that the hardware point check result is not passed, that is, a camera acquiring the surface feature and/or the side surface feature is faulty.

The specific dimensions of the surface features and the side surface features on the battery profiling body 510 provided in this embodiment are subjected to preset variation rules. As such, the check no longer depends on comparison with a single measurement value, making the check more robust, and an operating state of the battery housing cover welding system 1000 may be determined more accurately, thereby improving the precision and reliability of fault diagnosis.

According to some embodiments of the present application, the defect check result of the at least one defect image includes check defect data of the welding defect included in the at least one defect image, and step S706 of determining the software point check result of the visual check software based on the defect check result includes: obtaining actual defect data of the welding defect included in the at least one defect image; and determining whether the software point check result is passed based on the check defect data and the actual defect data.

In response to the check defect result being consistent with the actual defect data, a difference between them being within a feature range, etc., it is determined that the software point check result is passed, i.e., the visual check software is not faulty. In response to a check defect result being inconsistent with corresponding actual defect data, a difference between them being out of a feature range, etc., it is determined that the software point check result is not passed, i.e., the visual check software is faulty.

The implementation described above obtains the defect check result of the preset defect picture using the visual check software of the host computer, and may determine the software point check result of the visual check software of the battery housing cover welding system 1000 based on the defect check result. Accordingly, a problem may be found and solved timely, to ensure normal operation of the battery housing cover welding system 1000, improving the measurement accuracy and reliability, and thereby ensuring the accuracy of a check result. Compared with a conventional manual measurement method, the embodiment described above reduces manual intervention, not only improving a check speed and thereby improving production efficiency, but also reducing the possibility of an artificial error.

The actual defect data includes an actual defect type of the welding defect included in the at least one defect image, the check defect data includes a check defect type of the welding defect included in the at least one defect image, and determining whether the software point check result is passed based on the check defect data and the actual defect data includes: comparing the actual defect type of the welding defect included in the at least one defect image with the check defect type; and in response to an actual defect type of a first welding defect included in a first defect image of the at least one defect image being different from the check defect type, determining that the software point check result is not passed.

That is, if it is determined that the actual defect type of a defect in the defect image is different from the check defect type obtained by the check, there may be a deviation in a threshold parameter used by the visual check software to determine whether the defect is a first defect. Thus, whether there is a deviation in the threshold parameter of the visual check software that is used for determining the first defect may be determined by the implementation described above.

The implementation described above enables convenient and efficient check of a software parameter of the battery housing cover welding system 1000 by specifically comparing the actual defect type of the sample image with a check defect type.

As shown in FIGS. 1 to 6, the battery housing cover welding system 1000 includes: a calibration block 500 including a battery profiling body 510 which includes: a top surface 511, a first side surface 512 joined to the top surface 511 through a first edge 511-1, a second side surface 513 joined to the top surface 511 through a second edge 511-2, a third side surface joined to the top surface 511 through a third edge 511-3, and a fourth side surface joined to the top surface 511 through a fourth edge 511-4; a first surface feature 521, a second surface feature 522, a third surface feature 523, and a fourth surface feature 524 that are disposed near the first edge 511-1, the second edge 511-2, the third edge 511-3, and the fourth edge 511-4, respectively, and all located on the top surface 511; and a first side surface feature 531, a second side surface feature 532, a third side surface feature, and a fourth side surface feature that are disposed near the first edge 511-1, the second edge 511-2, the third edge 511-3, and the fourth edge 511-4, respectively, and located on the first side surface 512, the second side surface 513, the third side surface, and the fourth side surface, respectively; an image acquisition assembly 100 including a first camera 110, a second camera 120, a third camera 130, and a fourth camera 140, where the first camera 110 is located diagonally above the first edge 511-1 and used to acquire check images of the first surface feature 521 and the first side surface feature 531, the second camera 120 is located diagonally above the second edge 511-2 and used to acquire check images of the second surface feature 522 and the second side surface feature 532, the third camera 130 is located diagonally above the third edge 511-3 and used to acquire check images of the third surface feature 523 and the third side surface feature, and the fourth camera 140 is located diagonally above the fourth edge 511-4 and used to acquire check images of the fourth surface feature 524 and the fourth side surface feature; and a host computer configured to determine a hardware point check result of the image acquisition assembly 100 based on the check images acquired by the image acquisition assembly 100.

Each of the first surface feature 521, the second surface feature 522, the third surface feature 523, and the fourth surface feature 524 includes a plurality of surface feature portions spaced apart in an extension direction of a corresponding near edge among the first edge 511-1, the second edge 511-2, the third edge 511-3, and the fourth edge 511-4; and each of the first side surface feature 531, the second side surface feature 532, the third side surface feature, and the fourth side surface feature includes a plurality of side surface feature portions spaced apart in an extension direction of a corresponding near edge among the first edge 511-1, the second edge 511-2, the third edge 511-3, and the fourth edge 511-4. The plurality of surface feature portions each include first dimensions parallel to the corresponding near edge and the top surface 511 and second dimensions perpendicular to the corresponding near edge and parallel to the top surface 511, where either the first dimensions or the second dimensions of the plurality of surface feature portions vary along an extension direction of the corresponding near edge according to a first preset variation rule, while the other dimensions of the plurality of surface feature portions remain unchanged; and the plurality of side surface feature portions each include fourth dimensions perpendicular to a corresponding side surface where the side surface feature portions are located among the first side surface 512, the second side surface 513, the third side surface, and the fourth side surface, where the fourth dimensions of the plurality of side surface features vary along an extension direction of the corresponding near edge according to a second preset variation rule, while the other dimensions of the plurality of surface feature portions remain unchanged.

The host computer is configured to: obtain check images of the first surface feature 521, the second surface feature 522, the third surface feature 523, the fourth surface feature 524, the first side surface feature 531, the second side surface feature 532, the third side surface feature, and the fourth side surface feature; determine a point check determination parameter based on the check images; determine hardware point check results of the first camera 110, the second camera 120, the third camera 130, and the fourth camera 140 based on the point check determination parameter; obtain at least one defect image of a battery housing cover that includes at least one welding defect; determine a defect check result of the at least one defect image through visual check software of the battery housing cover welding system; and determine a software point check result of the visual check software based on the defect check result. The point check determination parameter includes check values of either the first dimensions or the second dimensions of the plurality of surface feature portions of each surface feature and check values of the fourth dimensions of the plurality of side surface feature portions of each side surface feature. The actual defect data includes an actual defect type of the welding defect included in the at least one defect image, and the check defect data includes a check defect type of the welding defect included in the at least one defect image.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery housing cover welding system, comprising:
a calibration block comprising:
a battery profiling body, the battery profiling body comprising a top surface, a first side surface joined to the top surface through a first edge, a second side surface joined to the top surface through a second edge, a third side surface joined to the top surface through a third edge, and a fourth side surface joined to the top surface through a fourth edge;
a first surface feature, a second surface feature, a third surface feature, and a fourth surface feature that are disposed near the first edge, the second edge, the third edge, and the fourth edge, respectively, and all located on the top surface; and
a first side surface feature, a second side surface feature, a third side surface feature, and a fourth side surface feature that are disposed near the first edge, the second edge, the third edge, and the fourth edge, respectively, and located on the first side surface, the second side surface, the third side surface, and the fourth side surface, respectively;
an image acquisition assembly comprising a first camera, a second camera, a third camera, and a fourth camera, wherein the first camera is located diagonally above the first edge and used to acquire check images of the first surface feature and the first side surface feature, the second camera is located diagonally above the second edge and used to acquire check images of the second surface feature and the second side surface feature, the third camera is located diagonally above the third edge and used to acquire check images of the third surface feature and the third side surface feature, and the fourth camera is located diagonally above the fourth edge and used to acquire check images of the fourth surface feature and the fourth side surface feature; and
a host computer configured to determine a hardware point check result of the image acquisition assembly based on the check images acquired by the image acquisition assembly,
wherein each of the first surface feature, the second surface feature, the third surface feature, and the fourth surface feature comprises a plurality of surface feature portions spaced apart in an extension direction of a corresponding near edge among the first edge, the second edge, the third edge, and the fourth edge; and
each of the first side surface feature, the second side surface feature, the third side surface feature, and the fourth side surface feature comprises a plurality of side surface feature portions spaced apart in an extension direction of a corresponding near edge among the first edge, the second edge, the third edge, and the fourth edge.

2. The system according to claim 1, wherein
the plurality of surface feature portions each comprise first dimensions parallel to the corresponding near edge and the top surface and second dimensions perpendicular to the corresponding near edge and parallel to the top surface, wherein either the first dimensions or the second dimensions of the plurality of surface feature portions vary along an extension direction of the corresponding near edge according to a first preset variation rule; and
the plurality of side surface feature portions each comprise fourth dimensions perpendicular to a corresponding side surface where the side surface feature portions are located among the first side surface, the second side surface, the third side surface, and the fourth side surface, wherein the fourth dimensions of the plurality of side surface feature portions vary along an extension direction of the corresponding near edge according to a second preset variation rule.

3. The system according to claim 2, wherein
the plurality of surface feature portions each further comprise third dimensions perpendicular to the top surface, wherein the others of the first dimensions and the second dimensions of the plurality of surface feature portions are equal to each other, and the third dimensions of the plurality of surface feature portions are equal to each other; and
the plurality of side surface feature portions each further comprise fifth dimensions parallel to the corresponding side surface where the side surface feature portions are located and the corresponding near edge and sixth dimensions parallel to the corresponding side surface where the side surface feature portions are located and perpendicular to the corresponding near edge, wherein the fifth dimensions of the plurality of side surface feature portions are equal to each other, and the sixth dimensions of the plurality of side surface feature portions are equal to each other.

4. The system according to claim 2, wherein the host computer is configured to:
determine a point check determination parameter based on check images acquired by the first camera, the second camera, the third camera, and the fourth camera; and
determine the hardware point check result based on the point check determination parameter,
wherein the point check determination parameter comprises check values of either the first dimensions or the second dimensions of the plurality of surface feature portions of each surface feature and check values of the fourth dimensions of the plurality of side surface feature portions of each side surface feature.

5. The method according to claim 4, wherein determining the hardware point check result based on the point check determination parameter comprises:
for each surface feature, determining a first check variation rule of the plurality of surface feature portions of the surface feature based on the check values of either the first dimensions or the second dimensions of the plurality of surface feature portions of the surface feature;
for each side surface feature, determining a second check variation rule of the plurality of side surface feature portions of the side surface feature based on check values of the fourth dimensions of the plurality of side surface feature portions of the side surface feature;
comparing the first check variation rule of each surface feature and the second check variation rule of each side surface feature with the first preset variation rule of the surface feature and the second preset variation rule of the side surface feature, respectively; and
determining whether the hardware point check result is passed based on a result of the comparison.

6. The system according to any one of claims 1 to 5, wherein the host computer is further configured to determine a software point check result of visual check software in the host computer, comprising:
obtaining at least one defect image of a battery housing cover that comprises at least one welding defect;
determining a defect check result of the at least one defect image through the visual check software; and
determining the software point check result of the battery housing cover welding system based on the defect check result.

7. The method according to claim 6, wherein the defect check result of the at least one defect image comprises check defect data of the welding defect comprised in the at least one defect image, and determining the software point check result of the battery housing cover welding system based on the defect check result comprises:
obtaining actual defect data of the welding defect comprised in the at least one defect image; and
determining whether the software point check result is passed based on the check defect data and the actual defect data.

8. The method according to claim 7, wherein the actual defect data comprises an actual defect type of the welding defect comprised in the at least one defect image, the check defect data comprises a check defect type of the welding defect comprised in the at least one defect image, and determining whether the software point check result is passed based on the check defect data and the actual defect data comprises:
comparing the actual defect type of the welding defect comprised in the at least one defect image with the check defect type; and
in response to an actual defect type of a first welding defect comprised in a first defect image of the at least one defect image being different from the check defect type, determining that the software point check result is not passed.

9. The system according to any one of claims 1 to 8, wherein
an indicator is also provided on the top surface to indicate a placement direction of the calibration block relative to the image acquisition assembly.

10. The system according to any one of claims 1 to 9, wherein the image acquisition assembly further comprises a mounting bracket, and the first camera, the second camera, the third camera and the fourth camera are connected to the mounting bracket and movable relative to the mounting bracket.

11. The system according to claim 10, wherein the mounting bracket comprises a first vertical support portion, a second vertical support portion, a first horizontal support portion, a second horizontal support portion, and a bottom plate, wherein the first vertical support portion and the second vertical support portion are spaced apart by a distance and fixed on the bottom plate, the first horizontal support portion and the second horizontal support portion are spaced apart by a distance and connected between the first vertical support portion and the second vertical support portion, and the first camera, the second camera, the third camera, and the fourth camera are movably connected to the bottom plate.

12. The system according to claim 11, wherein the first vertical support portion and the second vertical support portion are disposed in parallel and perpendicular to the bottom plate, and the first horizontal support portion and the second horizontal support portion are disposed in parallel and parallel to the bottom plate.

13. The system according to claim 11 or 12, wherein at least one of the first vertical support portion, the second vertical support portion, the first horizontal support portion, and the second horizontal support portion is provided with a hollow portion.

14. The system according to any one of claims 1 to 13, wherein a spacing by which the plurality of surface feature portions of each surface feature are spaced apart and a spacing by which the plurality of side surface feature portions of each side surface feature are spaced apart are determined based on check precisions of the first camera, the second camera, the third camera, and the fourth camera.

15. A point check method for a battery housing cover welding system, wherein the point check method is performed in the battery housing cover welding system according to any one of claims 1 to 14, and the point check method comprises:
obtaining check images of a first surface feature, a second surface feature, a third surface feature, a fourth surface feature, a first side surface feature, a second side surface feature, a third side surface feature, and a fourth side surface feature;
determining a point check determination parameter based on the check images;
determining hardware point check results of a first camera, a second camera, a third camera, and a fourth camera based on the point check determination parameter;
obtaining at least one defect image of a battery housing cover that comprises at least one welding defect;
determining a defect check result of the at least one defect image through visual check software of the system; and
determining a software point check result of the visual check software based on the defect check result.

16. The point check method according to claim 15, wherein the first camera and the third camera are disposed oppositely, the second camera and the fourth camera are disposed oppositely, and obtaining the check images of the first surface feature, the second surface feature, the third surface feature, the fourth surface feature, the first side surface feature, the second side surface feature, the third side surface feature, and the fourth side surface feature comprises:
causing the first camera and the third camera to be moved relative to an extension direction of the first edge and an extension direction of the third edge, respectively, to acquire check images of the first surface feature, the first side surface feature, the third surface feature, and the third side surface feature; and
causing the second camera and the fourth camera to be moved relative to an extension direction of the second edge and an extension direction of the fourth edge, respectively, to acquire check images of the second surface feature, the second side surface feature, the fourth surface feature, and the fourth side surface feature.

17. The method according to claim 15 or 16, wherein each of the first surface feature, the second surface feature, the third surface feature, and the fourth surface feature comprises a plurality of surface feature portions, and the plurality of surface feature portions each comprise first dimensions parallel to a corresponding near edge among the first edge, the second edge, the third edge, and the fourth edge and the top surface and second dimensions perpendicular to the corresponding near edge and parallel to the top surface, wherein either the first dimensions or the second dimensions of the plurality of surface feature portions vary according to a first preset variation rule; each of the first side surface feature, the second side surface feature, the third side surface feature, and the fourth side surface feature comprises a plurality of side surface feature portions, and the plurality of side surface feature portions each comprise fourth dimensions perpendicular to a corresponding side surface where the side surface feature portions are located among the first side surface, the second side surface, the third side surface, and the fourth side surface, wherein the fourth dimensions of the plurality of side surface feature portions vary according to a second preset variation rule; and
wherein the point check determination parameter comprises check values of either the first dimensions or the second dimensions of the plurality of surface feature portions of each surface feature and check values of the fourth dimensions of the plurality of side surface feature portions of each side surface feature.

18. The method according to claim 17, wherein determining the hardware point check results of the first camera, the second camera, the third camera, and the fourth camera based on the point check determination parameter comprises:
for each surface feature, determining a first check variation rule of the plurality of surface feature portions of the surface feature based on the check values of either the first dimensions or the second dimensions of the plurality of surface feature portions of the surface feature;
for each side surface feature, determining a second check variation rule of the plurality of side surface feature portions of the side surface feature based on check values of the fourth dimensions of the plurality of side surface feature portions of the side surface feature;
comparing the first check variation rule of each surface feature and the second check variation rule of each side surface feature with the first preset variation rule of the surface feature and the second preset variation rule of the side surface feature, respectively; and determining whether the hardware point check result is passed based on a result of the comparison.

19. The method according to ant one of claims 15 to 18, wherein the defect check result of the at least one defect image comprises check defect data of the welding defect comprised in the at least one defect image, and determining the software point check result of the visual check software based on the defect check result comprises:
obtaining actual defect data of the welding defect comprised in the at least one defect image; and
determining whether the software point check result is passed based on the check defect data and the actual defect data.

20. The method according to claim 19, wherein the actual defect data comprises an actual defect type of the welding defect comprised in the at least one defect image, the check defect data comprises a check defect type of the welding defect comprised in the at least one defect image, and determining whether the software point check result is passed based on the check defect data and the actual defect data comprises:
comparing the actual defect type of the welding defect comprised in the at least one defect image with the check defect type; and
in response to an actual defect type of a first welding defect comprised in a first defect image of the at least one defect image being different from the check defect type, determining that the software point check result is not passed.
